Europäisches Patentamt

European Patent Office

Office européen des brevets

(11) Veröffentlichungsnummer: **0 312 806 B1**

# EUROPÄISCHE PATENTSCHRIFT

(45) Veröffentlichungstag der Patentschrift: **25.03.92**

(51) Int. Cl.⁵: **H04Q 11/04**, H04M 11/06

(21) Anmeldenummer: **88115838.0**

(22) Anmeldetag: **26.09.88**

(54) Datenübertragungsverfahren für ein digitales Vermittlungssystem und Anordnung zur Durchführung des Verfahrens.

(30) Priorität: **19.10.87 DE 3735375**

(43) Veröffentlichungstag der Anmeldung:
**26.04.89 Patentblatt 89/17**

(45) Bekanntmachung des Hinweises auf die Patenterteilung:
**25.03.92 Patentblatt 92/13**

(84) Benannte Vertragsstaaten:
**AT BE CH DE ES FR GB GR IT LI NL SE**

(56) Entgegenhaltungen:

**IEEE INTERNATIONAL CONFERENCE ON COMMUNICATIONS: INEGRATING COMMUNICATION FOR WORLD PROGRESS, Boston, Massachusetts, 19.-22. Juni 1983, Band 3, Heft E6.5, Seiten 1-7, IEEE, New York, US; K. FUNG et al.: "Integrated digital access design for ISDN"**

**IEEE GLOBAL TELECOMMUNICATIONS CONFERENCE, Houston, Texas, 1.-4. Dezember 1986, Band 1, Heft 10.4, Seiten 1-5, IEEE, New York, US; G. ERIKSSON et al.: "Evolution of the axe 10 switching system towards ISDN"**

**PROCEEDINGS OF THE 1986 IEEE INTERNATIONAL CONFERENCE ON SYSTEMS, MAN, AND CYBERNETICS, Atlanta, Georgia, 14.-17. Oktober 1986, Seiten 1195-1199, IEEE, New York, US; J. WONG et al.: "Preemptive access protocols in ISDN"**

(73) Patentinhaber: **SIEMENS AKTIENGESELLSCHAFT**
**Wittelsbacherplatz 2**
**W-8000 München 2(DE)**

(72) Erfinder: **Geiger, Gerhard, Dipl.-Ing.**
**Hohenwaldeckstrasse 7**
**W-8162 Schliersee(DE)**
Erfinder: **Strafner, Michael, Dipl.-Ing.**
**Hartriegelweg 30**
**W-8011 Kirchheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 312 806 B1

**Beschreibung**

Die Erfindung betrifft ein Datenübertragungsverfahren für ein digitales Vermittlungssystem nach dem Oberbegriff des Patentanspruchs 1 sowie eine Anordnung zur Durchführung des Verfahrens nach dem Oberbegriff des Patentanspruchs 8.

Moderne digitale Vermittlungssysteme sind hierarchisch organisierte, rechnergesteuerte Systeme mit unterschiedlichsten hereinkommenden Teilnehmerleitungen. Die Einheiten eines Vermittlungssystems übernehmen die Aufgaben des Empfangs und der Weitervermittlung hereinkommender Daten. In der Hierarchieebene eines Vermittlungssystems können beispielsweise übergeordnete Einheiten eine Ortsvermittlung, eine Fernvermittlung oder eine Paketdatenvermittlung sein. Auf der nächstniedrigeren Hierarchieebene befinden sich untergeordnete Einheiten, beispielsweise Line Cards, die zwischen der oberen Hierarchieebene und den Endstellen der niedrigsten Hierarchieebene vermitteln. Derartige Line Cards besitzen beispielsweise Anschlüsse an PCM-Straßen.

Die untergeordneten Einheiten erzeugen im Bedarfsfall Signalisierungsinformationen, d. h. Kontrollinformationen zwischen der Endstelle und dem digitalen Netz, die zur Herstellung von Verbindungen für beispielsweise Sprach- oder Kommunikationsdatensignale benötigt werden. Man unterscheidet einerseits leitungsvermittelte Daten, bei der die Vermittlung für bestimmte Zeit von einer Endstelle zur anderen Endstelle erfolgt. Diese Möglichkeit wird für hochpriorisierte Sprachübertragung gewählt, ist aber für Datenübertragung oft unrentabel, da eine schlechte Ausnutzung der zur Verfügung stehenden Verbindungsleitungen vorliegt. Man unterscheidet andererseits die für eine Datenvermittlung typischen paketvermittelten Daten, bei dem ein Netzknoten zur Zwischenspeicherung der Daten verwendet wird, um einen möglichst günstigen Übertragungsweg durch das Netz von einer Endstelle zur anderen Endstelle zu suchen. Dabei werden die Netzleitungen nur zur Übertragung benötigt.

Eine Möglichkeit der Kombination leitungsvermittelter und paketvermittelter Daten bietet das ISDN-System (Integrated Services Digital Network). Dieses System kann Endstellen mit Vermittlungen verbinden, um Zugang zu Kommunikationsdiensten zu bekommen. Der ISDN-Basisanschluß bietet zwei Sprachkanäle mit je 64 kbit/s- und einen Datenkanal mit 16 kbit/s- Übertragungskapazität. Im ISDN-System erfolgt der Zugang zu Kommunikationsdiensten aufgrund der Anwendung bestimmter Protokolle, die in den CCITT-Empfehlungen definiert sind. Diese Protokolle werden über den Datenkanal, den D-Kanal ausgetauscht, über den auch noch Signalisierungsdaten zur Herstellung von Verbindungen für die leitungsvermittelten B-Kanäle für die Nutzdaten- bzw. Sprachübertragung übertragen werden können.

Die Mehrfachverwendung des D-Kanals kann dazu führen, daß das Verkehrsaufkommen im D-Kanal um mehrere Größenordnungen variieren kann. In der vorveröffentlichten Druckschrift Randy Kun: "A VLSI APPROACH TO SUPPORTING LAPD IN AN ISDN EXCHANGE TERMINATION", BNR, IEEE, Seiten 760-765 ist dazu ausgeführt, daß die Schwankungen im Verkehrsaufkommen des D-Kanals dadurch herrühren, daß es eine unterschiedliche Anzahl an Endstellen gibt, von denen jede eine unterschiedliche Anzahl von Anwendungen unterstützt, die wiederum ihre eigenen Verkehrscharakteristiken aufweisen. Weiter ist ausgeführt, daß in einem ISDN-System die Datenverarbeitung des D-Kanals in einer Vermittlung bei Benutzung kommerziell erhältlicher Anordnungen teuer ist, da diese nicht alle ISDN-Anforderungen erfüllen. Die Anordnungen sind zur Unterstützung einer kleinen Zahl von Hochgeschwindigkeitskanälen ausgelegt, wogegen Paketvermittlungen kosteneffektiv eine große Anzahl von Kanälen mit niedriger Übertragungsgeschwindigkeit unterstützen müssen. Die Akzeptanz von Paketvermittlung im ISDN ist deshalb bisher fraglich.

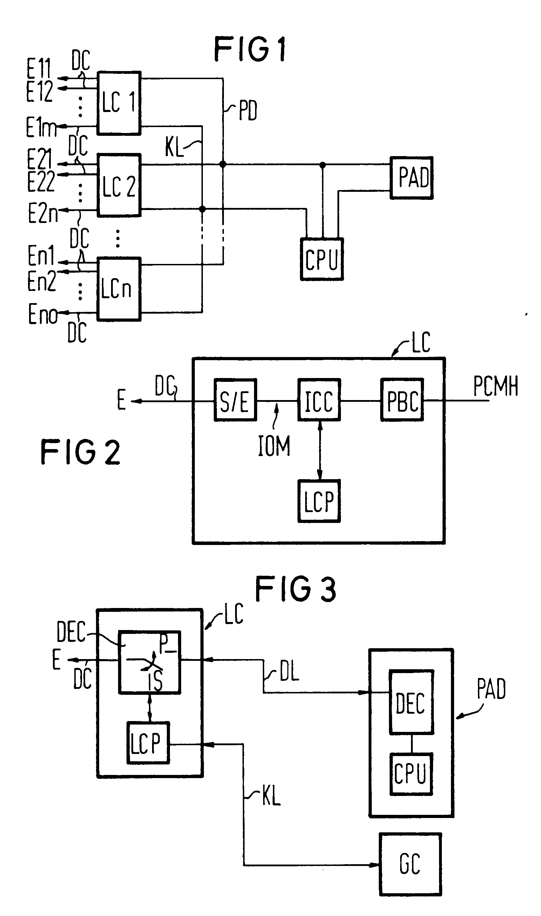

FIG 1 zeigt eine typische Architektur eines Vermittlungssystems für die Behandlung von Paketdaten. Endstellen Eii sind über Endstellenleitungen DC mit untergeordneten Einheiten LCi verbunden, die ihrerseits über Paketdatenleitungen PD mit einer Paketvermittlung PAD und einem zentralen Steuerrechner CPU sowie über Steuerleitungen KL mit dem zentralen Steuerrechner verbunden sind.

Die untergeordneten Einheiten werden beispielsweise im ISDN durch Line Cards gebildet, von denen gemäß FIG 2 eine schematisch dargestellt ist. Die Endstellenleitungen DC sind auf der Line Card mit Sende-/Empfangsbausteinen S/E verbunden, von denen der besseren Übersicht halber nur einer dargestellt ist. Diesem Baustein ist ein Kommunikationskontrollbaustein ICC und ein Peripheriekontrollbaustein PBC nachgeschaltet. Der Kommunikationskontrollbaustein ICC hat unter anderem die Aufgabe, die D-Kanal-Informationen zu verarbeiten und die B-Kanäle transparent in beiden Richtungen durchzuschalten. Der Kommunikationskontrollbaustein ICC steht dazu mit einem lokalen Rechner LCP der untergeordneten Einheit in Verbindung, der auch eine Vorverarbeitung der Signalisierungsdaten vornehmen kann. Die Schnittstelle IOM zwischen dem Sende-/Empfangsbaustein S/E und dem Kommunikationskontrollbaustein ICC ist im ISDN als modulare Schnittstelle ausgelegt. Der Peripheriekontrollbaustein PBC verbindet die Endstellenleitungen mit den übergeordneten Einheiten. Er dient dabei neben der Sprach-, Daten- und Signalleitungskontrolle als Multiplexer oder Demultiplexer für die PCM-Straßen PCMH.

Bausteine für die Vermittlungstechnik sind beispielsweise von B. Müller: "Kommunikationsbausteine für die digitale Übertragungstechnik", Siemens Components 25 ( 1987), Heft 2, Seiten 65 - 69 beschrieben.

Die untergeordnete Einheit, beispielsweise die Line Card, hat die Aufgabe, die B- und D-Kanäle möglichst früh zu trennen. Während die B-Kanäle auf die PCM-Straßen geschaltet werden, werden die Datenpakete des D-Kanals auf der untergeordneten Einheit zunächst ausgepackt, um zu prüfen, ob eine Signalisierungsinformation oder ein Datenpaket vorliegt und dann gegebenenfalls weiterverarbeitet oder wieder eingepackt.

Bei einer Paketdatenarchitektur gemäß FIG 1 unterscheidet man im Stand der Technik bisher zwei Kategorien:

1. Systeme mit dezentraler Behandlung von Signalisierungsund Paketdaten auf der untergeordneten Einheit.

Diese Architekturen sind geeignet, wenn im D-Kanal relativ geringe Verkehrswerte, d. h. Signalisierungsdaten mit wenig Paketdaten auftreten. Bei zunehmendem Verkehrswert für Paketdaten stößt das System an Grenzen. Typischerweise kann ein leistungsfähiger Prozessor der untergeordneten Einheit bis zu 16 Endstellen bedienen, wenn nur Signalisierungsdaten vorkommen, jedoch nur vier Endstellen, wenn Paketdaten hinzukommen. Ein Vertreter dieser Architektur ist das EWSD-System der Siemens AG. Auf der untergeordneten Einheit müssen die Signalisierungs- und Paketdaten zunächst zwischengespeichert werden, bevor sie zum Steuerrechner weitergeleitet werden und außerdem sind für Signalisierungs- und Paketdaten getrennte Kontrollbausteine erforderlich, um die Datenpakete in programmierbaren Zeitschlitzen zu senden und zu empfangen. Eine Vorleistung bei der Auslegung der untergeordneten Einheit auf maximales Verkehrsaufkommen ist wegen des hohen Aufwands für benötigte Speicherkapazität und -verwaltung wirtschaftlich nicht vertretbar.

2. Systeme mit zentraler Paketbehandlung.

In diesen Systemen werden die Paketdaten über eigene Leitungen oder PCM-Straßen zu leistungsfähigen übergeordneten Einheiten PAD z. B. einer zentralen Paketdatenvermittlung vermittelt. Die Paketdaten werden dann auf der unteregeordneten Einheit nicht mehr ausgepackt. Der Vorteil dieser Systeme besteht in der Möglichkeit, daß nur an einer Stelle im System eine leistungsfähige übergeordnete Einheit nötig ist. Der Nachteil besteht darin, daß bis zu dieser übergeordneten Einheit permanente oder semipermanente Verbindungen für Signalisierungs- und Paketdaten zur Verfügung stehen müssen. Eine Trennung der sehr verschiedenen Datenarten ist nur in der übergeordneten Einheit möglich. Da auf der übergeordneten Einheit wegen der Signalisierungsdaten eine Zwischenspeicherung erforderlich ist, wird bei diesem System das Speicherproblem nur zur übergeordneten Einheit verschoben. Entsprechend sind auf der übergeordneten Einheit Kontrollbausteine für die Signalisierungs-und -Paketdaten getrennt erforderlich. Eine derartige Architektur wird in der zitierten Veröffentlichung Randy Kun beschrieben und von mehreren Firmen angewandt.

Wünschenswert ist eine Systemarchitektur, bei der die Vorteile der beiden beschriebenen Systeme genutzt werden können und die Nachteile eliminiert sind.

Gemäß der in FIG 2 beschriebenen untergeordneten Einheit bedeutet das, daß die Paketdaten an der IOM-Schnittstelle noch vor dem Kommunikationskontrollbaustein ICC abgetrennt werden müssen und daß ein zweiter Kommunikationskontrollbaustein erforderlich ist, der im Bereich der übergeordneten Einheit angeordnet sein muß, da die Paketdaten zentral im System verfügbar sein sollen. Dazu sind aber eine Unzahl von Leitungen erforderlich und der üblicherweise für die Übertragung benutzte synchronisierte Pulsrahmen wird schlecht ausgenutzt. Darüberhinaus ist eine Konzentration der Paketdaten zwischen der IOM-Schnittstelle und dem zweiten Kommunikationskontrollbaustein ICC nicht problemlos möglich. Zwar bietet die Richtung von der Endstelle zur übergeordneten Einheit keine wesentlichen Probleme, wohl aber die umgekehrte Richtung. In der untergeordneten Einheit muß eine Möglichkeit vorhanden sein, die Signalisierungs- und Paketdaten in Richtung der übergeordneten Einheit voneinander zu trennen und in Richtung zur Endstelle auf den gleichen Datenkanal zu schalten. Eine in Richtung auf die Endstelle zwischen den beiden Datenarten auftretende Kollision muß ohne Datenverlust gelöst werden.

Ein Verfahren zur Kollisionsauflösung ist in der europäischen Patentanmeldung 0175095 beschrieben. Es beruht darauf, daß die Absender von Daten durch Mithören auf der Datenleitung eine Kollission noch während des Sendevorgangs detektieren und bei Verfälschung der gesendeten Daten den Sendevorgang taktgenau beenden. Damit kann aber zwischen den Absendern und Empfängern von Daten keine Zeitstufe und keine Konzentrations- oder Vermittlungsfunktion eingeführt werden. Neben dem mit einer zentralen Architektur vergleichbaren internen Verdrahtungsaufwand führt damit dieses Verfahren zu einer schlechten Ausnutzung der systeminternen Verbindungsleitungen.

Der Erfindung liegt die Aufgabe zugrunde, bei einem Verfahren und einer Anordnung der eingangs genannten Art eine Möglichkeit der dezentralen Behandlung und Vorverarbeitung von Signalisierungsdaten auf der untergeordneten Einheit und eine Möglichkeit zur Behandlung der Paketdaten in einer übergeordneten Einheit anzugeben. Der Erfindung liegt weiterhin die Aufgabe zugrunde, das Verfahren und die Anordnung modulfähig auszugestalten, so daß sie bei Bedarf in das Vermittlungssystem eingebracht und je nach Verkehrswert für Paketdaten angepaßt werden können.

Diese Aufgabe wird bei einem Verfahren der eingangs genannten Art erfindungsgemäß durch die Merkmale des kennzeichnenden Teils des Patentanspruchs 1 gelöst. Die Aufgabe wird weiterhin bei einer Anordnung der eingangs genannten Art erfindungsgemäß durch die Merkmale des kennzeichnenden Teils des Patentanspruchs 8 gelöst.

Die Erfindung besitzt den Vorteil, daß eine teure Vorleistung auf der untergeordneten Einheit nicht notwendig ist. Sie besitzt weiterhin den Vorteil, daß die Signalisierungs- und Paketdaten entsprechend ihrem Charakter völlig unterschiedlich verarbeitet werden können, da aufgrund der frühzeitigen Trennung der beiden Datenarten die Signalisierungsdaten mit hoher Priorität sehr schnell verarbeitet werden können, während die mit einer geringeren Priorität ausgestatteten Paketdaten länger warten können, bis ein optimaler Übertragungsweg gefunden ist. Aufgrund der Modulfähigkeit kann das Vermittlungssystem immer an den Verkehrswert von Paketdaten angepaßt werden. Die Erfindung läßt sich durch Implementierung in integrierte Bausteine so unterstützen, daß ein Anwender dieser integrierten Bausteine nichts von auftretenden Kollisionen und deren Auflösung merkt. Eine Kollisison wird durch die Erfindung auch dann gelöst, wenn die Quellen für die zu vermittelnden Daten nicht gleichzeitig oder taktgenau senden.

Weitere Ausgestaltungen des Erfindungsgedankens sind in Unteransprüchen gekennzeichnet.

Die Erfindung wird im folgenden anhand von in den Figuren der Zeichnung dargestellten Ausführungsbeispielen näher erläutert.

Dabei sind gleiche Elemente mit gleichen Bezugszeichen versehen.

Es zeigt:

FIG 1
die bereits beschriebene prinzipielle Struktur eines digitalen Vermittlungssystems und

FIG 2
ein ebenfalls bereits beschriebenes bekanntes Ausführungsbeispiel einer untergeordneten Einheit für ISDN,

FIG 3
ein Schemabild einer erfindungsgemäßen Anordnung zur Durchführung des erfindungsgemäßen Verfahrens,

FIG 4 bis FIG 7
Ausführungsbeispiele von erfindungsgemäßen Anordnungen zur Durchführung des erfindungsgemäßen Verfahrens, die sich durch die Übertragungswege für Paketdaten zwischen der untergeordneten und der übergeordneten Einheit unterscheiden, und

FIG 8
ein Ausführungsbeispiel einer Implementierung der erfindungsgemäßen Anordnung in einem integrierten Baustein.

Gemäß FIG 3 ist auf der untergeordneten Einheit LC für jede Endstelle ein als "intelligenter Schalter" wirkender Datenkontrollbaustein DEC vorgesehen. Dieser Kontrollbaustein DEC kann Signalisierungs- und Paketdaten in Richtung zur übergeordneten Einheit PAD auf der untergeordneten Einheit LC trennen und in der anderen Richtung zur Endstelle fließende Daten auf den gleichen Datenkanal einer Endstellenleitung DC schalten. Die Paketdaten werden dabei über eine Datenleitung DL zur übergeordneten Einheit übertragen, die ebenfalls einen Datenkontrollbaustein DEC enthält, der mit einem Steuerrechner CPU in Verbindung steht. Zur Vorverarbeitung von Signalisierungsdaten auf der untergeordneten Einheit LC ist der Datenkontrollbaustein DEC dieser Einheit an einen lokalen Prozessor LCP angeschlossen. Der lokale Prozessor LCP steht über eine Steuerleitung KL mit einer Gruppenkontrolleinrichtung GC in Verbindung, an die verschiedene untergeordnete Einheiten LCi angeschlossen sind. Zur besseren Übersicht ist in FIG 3 nur eine untergeordnetet Einheit LC eingezeichnet. Bei der in der FIG 3 beschriebenen Anordnung zur Durchführung des erfindungsgemäßen Verfahrens ist auf der untergeordneten und übergeordneten Einheit je ein Datenkontrollbaustein erforderlich.

Mit Hilfe des intelligenten Schalters führen die Datenkontrollbausteine DEC auf der untergeordneten Einheit eine Trennung von Signalisierungs- und Paketdaten durch. Von einer Endstelle E gesendete Signalisierungs- oder Paketdaten werden erfindungsgemäß anhand einer Paketadresse identifiziert und anschließend getrennt. Die Signalisierungsdaten werden zum lokalen Prozessor LCP geführt und können dort vorverarbeitet werden. Paketdaten werden zur übergeordneten Einheit PAD geführt und können beispielsweise in 16 kbit/s - Zeitschlitze auf PCM-Straßen gemultiplext werden.

In umgekehrter Richtung sieht das erfindungsgemäße Verfahren vor, daß eine auf dem Datenkontrollbaustein DEC angeordnete Überwachungseinrichtung den Datenkanal einer Endstellenleitung DC auf Paketdaten überwacht. Von einer übergeordneten Einheit PAD gesendete, auf der untergeordneten Einheit LC ankommende Paketdaten werden, gegebenenfalls nach dem Demultiplexen, zunächst zwischengespeichert. Als Zwischenspeicher ist ein Register vorgesehen, das mit einer Bitbreite von 2 bit minimal gehalten werden kann. Im Anschluß an die Zwischenspeicherung werden die Paketdaten auf den Datenkanal der Endstellenleitung DC geschaltet. Mit Hilfe der Überwachungseinrichtung kann der als Quelle für Signalisierungsdaten dienende lokale Prozessor LCP, der Signalisierungsprozessor, den Datenkanal für die Paketdaten überwachen und den Zustand "frei" oder "belegt" erkennen. Solange ein von Paketdaten freier Zustand des Datenkanals festgestellt wird, können mit Hilfe des Signalisierungsprozessors bei Bedarf Signalisierungsdaten im Datenkanal zur Endstelle gesendet werden. Gleichzeitig wird in diesem Fall ein Steuersignal zur übergeordneten Einheit PAD gesendet, das dieser die Belegung des Datenkanals anzeigt. Zur Übertragung dieser Steuerinformation kann der gleiche Weg wie zur Übertragung der Paketdaten verwendet werden. Die übergeordnete Einheit ist dann informiert, daß der Datenkanal besetzt ist.

Eine Kollision von Signalisierungs- und Paketdaten tritt dann auf, wenn der Datenkanal mit Signalisierungsdaten belegt ist, das Steuersignal für die Anzeige des Belegungszustandes aber erst bei der Quelle für Paketdaten, d. h. bei der übergeordneten Einheit PAD eintrifft, wenn diese bereits mit dem Senden von Paketdaten begonnen hat. Diese zeitliche Verzögerung kann beispielsweise durch eine Zeitmultiplexfunktion für Paketdaten entstehen. In diesem Fall stoppt die übergeordnete Einheit PAD den Sendevorgang nach Eintreffen des Steuersignals und beginnt den Sendevorgang von neuem, wenn das Steuersignal wieder einen freien Datenkanal signalisiert. Der bereits gesendete Teil der Paketdaten wird auf der untergeordneten Einheit LC verworfen. Die Auflösung eines derartigen Kollisionsfalls erfolgt also dadurch, daß der Signalisierungsprozessor die höher priorisierten Signalisierungsdaten zur Endstelle senden kann. Erfindungsgemäß wird das Kollisionsproblem mit dem beschriebenen Verfahren auch dann gelöst, wenn die Quellen für den Datenkanal, d. h. die übergeordnete Einheit PAD und der lokale Signalisierungsprozessor LCP nicht gleichzeitig oder taktgenau senden. Eine Konzentration der Paketdaten auf PCM-Straßen oder speziellen Leitungen ist möglich. Vorzugsweise werden deshalb die Paketdaten im Multiplex/Demultiplex-Betrieb übertragen.

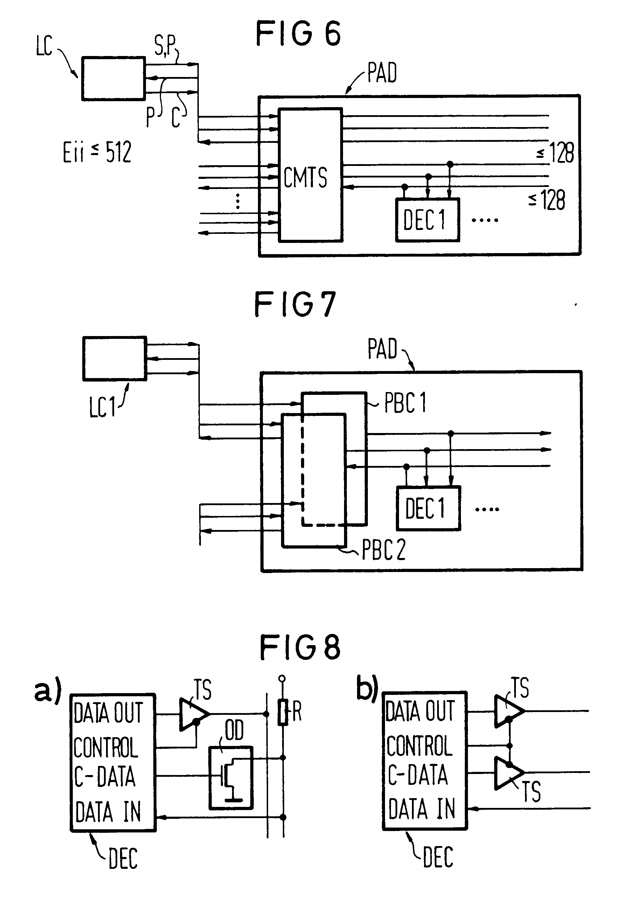

Der Kontrollbaustein DEC, der auf der untergeordneten Einheit die Protokollbehandlung für die Signalisierungsdaten durchführt, muß zur Durchführung des erfindungsgemäßen Verfahrens folgende Funktionsblöcke zusätzlich beinhalten: Einen Ausgang und einen Eingang für die Paketdaten, einen Ausgang für das Steuersignal ("Datenkanal belegt/frei"), eine Programmiereinrichtung für die Programmierung von Zeitschlitzen für diese Ein- und Ausgänge, ein Register zum Zwischenspeichern der Paketdaten, eine Überwachungseinrichtung, die den Zustand des Datenkanals für die Paketdaten überprüft (frei oder belegt) und eine Logikeinrichtung, die den Datenkanal zuteilt. Vorzugsweise sind die Ausgänge busfähig und sind deshalb mit open drain-Stufen und/oder Tristate-Ausgängen mit zugehörigem Kontrollsignal versehen. FIG 8 zeigt zwei Ausführungsbeispiele für Datenkontrollbausteine DEC mit den entsprechenden zusätzlichen Ein- und Ausgängen sowie mit den Kontrollausgängen für Tristate-Verstärker TS. Die open drain-Stufen bewirken, daß sich ein logischer Nullpegel aus dem Bus durchsetzt. Die zusätzlichen Funktionsblöcke lassen sich vorzugsweise in einen integrierten Baustein implementieren.

Ein derartiger Datenkontrollbaustein DEC ist in der Lage, entweder die Paketdaten oder die Signalisierungsdaten auf den endstellenseitigen Datenkanal zu schalten und ein Steuersignal über den Belegzustand des Datenkanals an die übergeordnete Einheit abzugeben.

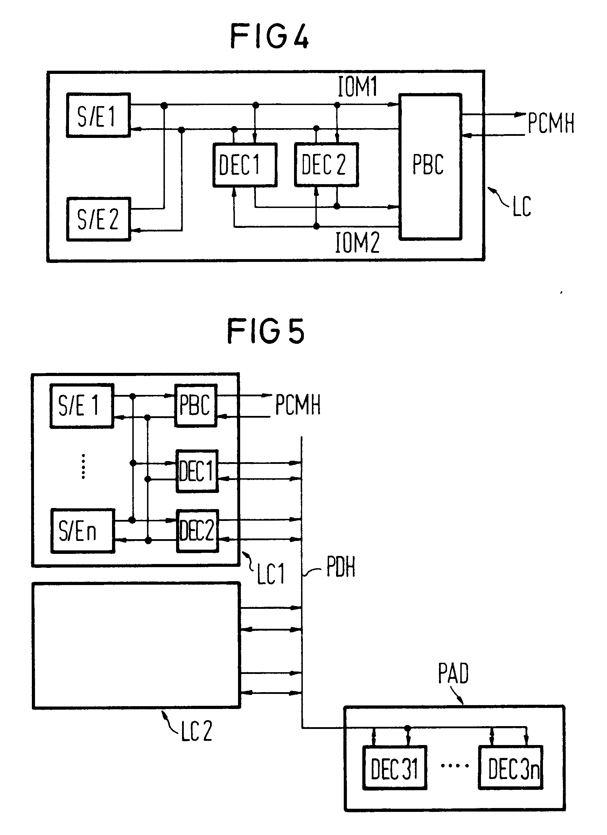

Gemäß den FIG 4 bis 7 sind Ausführungsbeispiele dargestellt, die sich durch die Übertragungswege für Paketdaten zwischen der untergeordneten und übergeordneten Einheit unterscheiden.

Die in FIG 4 gezeigte Architektur ist dadurch charakterisiert, daß Paketdaten mit Hilfe eines Peripheriekontrollbausteins PBC über bestehende PCM-Straßen PCMH zur übergeordneten Einheit transferiert werden. Die intern auf der untergeordneten Einheit zwischen den Sende-/Empfangsbausteinen S/Ei und dem Peripherie-Kontrollbaustein PBC ausgetauschten Informationen werden von entsprechenden Datenkontrollbausteinen DECi überwacht. Die systeminterne Verbindung wird im Ausführungsbeispiel bei Paketdaten wie bei leitungsvermittelten Kanälen auf- und abgebaut. Dies führt zur optimalen Nutzung der internen Verdrahtung des Vermittlungssystems und der übergeordneten Einheit PAD. Eine Konzentration der Paketdaten ist möglich.

Die Datenkontrollbausteine DECi behandeln die Signalisierungsdaten in beiden Richtungen und schalten die Paketdaten in Richtung zur übergeordneten Einheit ohne Zwischenspeicher durch. In Richtung zur Endstelle wird die Kollision zwischen Signalisierungsdaten und Paketdaten überwacht und erfindungsgemäß gelöst. Für Paketdaten ist in diesem Fall ein minimaler Zwischenspeicher mit einer bit-Breite von weniger als 2 bit notwendig.

Da der Transfer der Paketdaten über die vorhandene interne Verdrahtung durchgeführt wird, lassen sich bei Verwendung dieser Architektur gemäß FIG 4 Paketvermittlungsfunktionen leicht in bestehende Vermittlungssysteme einbringen, ohne daß die Rückebenenverdrahtung zu ändern ist. Wenn die Kapazität auf den systeminternen PCM-Straßen PCMH durch die zusätzliche Übertragung von Paketdaten zum Engpaß wird, kann gemäß den folgenden Ausführungsbeispielen eine Alternativ-Architektur mit eigener Leitung zur Übertragung von Paketdaten gewählt werden. Auch in den folgenden Ausführungsbeispielen werden die Paketdaten beispielsweise im Zeitmultiplex auf diese eigenen Leitungen geschaltet.

Gemäß dem Ausführungsbeispiel der FIG 5 wird keine Vermittlungsfunktion für Paketdaten zwischen der untergeordneten und der übergeordneten Einheit verwendet. Die Nutzdaten werden über einen Peripherie-Kontrollbaustein PBC über PCM-Straßen PCMH weitergeleitet und empfangen. Die Paketdaten gelangen über Datenkontrollbausteine DECi und Paketdatenleitungen PDH von der untergeordneten Einheit LCi zur übergeordneten Einheit PAD und umgekehrt. Die Variante gemäß FIG 5 bietet sich an, wenn keine Konzentration von Daten vorgesehen wird, d. h., daß jedem Teilnehmer in der übergeordneten Einheit ein Datenkontrollbaustein zur Verfügung steht.

Betrachtet man statistische Verkehrswerte für Paketdaten so läßt sich bei einer Integration über eine Vielzahl von Endstellen feststellen, daß eine Konzentration von Paketdaten und damit eine Kostenverbesserung möglich ist. Je nach Grad der Konzentration lassen sich zwei bis vier Endstellen auf einen Datenkontrollbaustein schalten. Gemäß FIG 6 wird jeweils vier Endstellen ein Datenkontrollbaustein DEC zugeordnet. Bekannte Zeitkoppelstufen erlauben die Vermittlung von 64 kbit/s-Kanälen. Damit können nicht alle zur Verfügung stehenden Datenkontrollbausteine DECi auf jede Endstelle geschaltet werden. Eine derartige Möglichkeit ist jedoch durch das Ausführungsbeispiel gemäß FIG 7 gegeben.

Gemäß FIG 7 werden Peripheriekontrollbausteine PBCi als Zeitstufe verwendet, die eine optimale Ausnutzung der zur Verfügung stehenden Datenkontrollbausteine DECi erlauben. Da ein Peripheriekontrollbaustein PBC auch 16 kbit/s-Kanäle in ISDN vermitteln kann, sind im Ausführungsbeispiel gemäß FIG 7 uneingeschränkte Vermittlungsfunktionen zwischen Paketdatenkanälen und Datenkontrollbausteinen DECi möglich.

Bei allen drei Ausführungsbeispielen gemäß den FIG 5 bis 7 werden die gleichen untergeordneten Einheiten LC verwendet. Im Unterschied zu der in FIG 4 verwendeten untergeordneten Einheit werden gemäß den FIG 5 bis 7 die Paketdaten direkt vom Datenkontrollbaustein DEC auf die Leitungen der Rückebene geschaltet.

## Patentansprüche

1. Datenübertragungsverfahren für ein digitales Vermittlungssystem, das hierarchisch in mindestens drei Ebenen organisiert ist, die Endstellen, unter- und übergeordnete Einheiten umfassen, und in dem bidirektional über Datenkanäle Signalisierungsdaten und Paketdaten vermittelt werden können, **dadurch gekennzeichnet,** daß die untergeordneten Einheiten (LCi) eine Trennung von Signalisierungsdaten und Paketdaten durchführen und daß eine Kollision von Daten durch folgende Verfahrensschritte verhindert wird:

   a) Eine Überwachungseinrichtung einer untergeordneten Einheit überwacht den Datenkanal einer Endstellenleitung (DC);
   b) Von einer übergeordneten Einheit (PAD) gesendete, auf der untergeordneten Einheit (LCi) ankommende Paketdaten werden zwischengespeichert und anschließend auf den Datenkanal der Endstellenleitung (DC) geschaltet;
   c) Bei Feststellung eines von Paketdaten freien Zustandes des Datenkanals werden gegebenenfalls Signalisierungsdaten über den Datenkanal zur Endstelle (E) und
   d) gleichzeitig ein die Belegung des Datenkanals anzeigendes Steuersignal zur übergeordneten Einheit (PAD) gesendet;
   e) Trifft das Steuersignal bei der übergeordneten Einheit (PAD) nach dem Sendebeginn von Paketdaten ein, dann wird der Sendevorgang gestoppt und
   f) die bereits gesendeten Paketdaten auf der untergeordneten Einheit (LCi) verworfen;
   g) Nach erneuter Feststellung eines freien Zustandes des Datenkanals beginnt der Sendevorgang der übergeordneten Einheit (PAD) von Neuem.

2. Verfahren nach Anspruch 1, **dadurch gekennzeichnet,** daß von einer Endstelle (E) gesendete Signalisierungsdaten oder Paketdaten anhand einer Adresse identifiziert und anschließend getrennt werden und daß diese Signalisierungsdaten zu einem lokalen Prozessor (LCP) und die Paketdaten zur übergeordneten Einheit (PAD) geführt werden.

3. Verfahren nach Anspruch 1 oder 2, **dadurch gekennzeichnet,** daß das Steuersignal auf dem gleichen Leitungsweg wie Paketdaten zur übergeordneten Einheit (PAD) übertragen wird.

4. Verfahren nach Ansprüchen 1 bis 3, **dadurch gekennzeichnet,** daß die untergeordnete Einheit (LCi) Paketdaten im Multiplexbetrieb zur übergeordneten Einheit (PAD) sendet und in umgekehrter Senderichtung im Demultiplexbetrieb arbeitet.

5. Verfahren nach Ansprüchen 1 bis 4, **dadurch gekennzeichnet,** daß die Paketdaten im Sendebetrieb zwischen den untergeordneten (LCi) und übergeordneten Einheiten (PAD) konzentriert werden.

6. Verfahren nach Ansprüchen 1 bis 5, **dadurch gekennzeichnet,** daß die von der übergeordneten (PAD) an die untergeordnete Einheit (LCi) gesendeten Paketdaten für 2 bit/s-Zeitschlitze zwischengespeichert werden.

7. Verfahren nach Ansprüchen 1 bis 6, **dadurch gekennzeichnet,** daß die bidirektionale Datenübertragung zwischen unter- und übergeordneten Einheiten (LCi, PAD) in Pulscodemodulation (PCM) durchgeführt wird.

8. Anordnung zur Durchführung eines Datenübertragungsverfahrens für ein digitales Vermittlungssystem, das hierarchisch in mindestens drei Ebenen, die Endstellen sowie unter- und übergeordnete Einheiten umfassen, organisiert ist, und in dem bidirektional über Datenkanäle Signalisierungs- und Paketdaten vermittelt werden können, **durch gekennzeichnet,** daß die untergeordnete Einheit eine Datenkontrolleinrichtung (DEC) mit einer Überwachungseinrichtung zur Überprüfung des Datenkanals auf Paketdaten, einer Logikeinrichtung für die Zuteilung eines Datenkanals, einem Register zur Zwischenspeicherung, einem Eingang (DATA IN) und einem Ausgang (DATA OUT) für Paketdaten, einem Ausgang (C-DATA) für das Steuersignal und mit einer Programmiereinrichtung für die Programmierung von Zeitschlitzen für diese Ein- und Ausgänge enthält.

9. Anordnung nach Anspruch 8, **dadurch gekennzeichnet,** daß die Ausgänge (DATA OUT, C-DATA) open-drain-Stufen enthalten und / oder Tristate-Ausgänge mit zusätzlichen Kontrollausgängen (control) bilden.

10. Anordnung nach Anspruch 8 oder 9, **dadurch gekennzeichnet,** daß das Register 2 bit breit ist und die Programmiereinrichtung für die Programmierung von 2 bit/sZeitschlitzen vorgesehen ist.

11. Anordnung nach Ansprüchen 8 bis 10, **dadurch gekennzeichnet,** daß die Datenkontrolleinrichtung (DEC) entsprechend auch in der übergeordneten Einheit (PAD) vorhanden ist.

12. Anordnung nach Ansprüchen 8 bis 11, **dadurch gekennzeichnet,** daß die Datenkontrolleinrichtung (DEC) modular einfügbar ist.

**Claims**

1. Data transmission method for a digital switching system, which is organised hierarchically on at least three levels which comprise terminal stations, subordinate and superordinate units, and in which signalling data and packet data can be switched bidirectionally via data channels, characterised in that the subordinate units (LCi) separate signalling data and packet data and in that a collision of data is prevented by the following method steps:

a) A monitoring unit of a subordinate unit monitors the data channel of a terminal station line (DC);

b) packet data transmitted from a superordinate unit (PAD) and arriving at the subordinate unit (LCi) are temporarily stored and subsequently switched on the data channel of the terminal station line (DC);

c) when a state of the data channel free of packet data is established, if appropriate, signalling data are transmitted to the terminal station (E) via the data channel and

d) simultaneously a control signal indicating seizure of the data channel is transmitted to the superordinate unit (PAD);

e) if the control signal arrives at the superordinate unit (PAD) after transmission of packet data has begun, then the transmitting operation is halted and

f) the already transmitted packet data are scrapped on the subordinate unit (LCi);

g) when a free state of the data channel is established again, the transmitting operation of the superordinate unit (PAD) starts again from the beginning.

2. Method according to Claim 1, characterised in that signalling data or packet data transmitted from a terminal station (E) are identified by means of an address and are subsequently separated, and in that these signalling data are passed on to a local processor (LCP) and the packet data are passed on to the superordinate unit (PAD).

3. Method according to Claim 1 or 2, characterised in that the control signal is transmitted on the same line path as packet data to the superordinate unit (PAD).

4. Method according to any one of Claims 1 to 3, characterised in that the subordinate unit (LCi) transmits packet data in multiplexing mode to the superordinate unit (PAD) and works in demultiplexing mode in the reverse transmission direction.

5. Method according to any one of Claims 1 to 4, characterised in that the packet data are concentrated in the transmitting mode between the subordinate (LCi) and superordinate units (PAD).

6. Method according to any one of Claims 1 to 5, characterised in that the packet data transmitted from the superordinate (PAD) to the subordinate unit (LCi) are temporarily stored for 2 bit/s time slots.

7. Method according to any one of Claims 1 to 6, characterised in that the bidirectional data transmission between subordinate and superordinate units (LCi, PAD) is carried out in pulse code modulation (PCM).

8. Arrangement for carrying out a data transmission method for a digital switching system, which is organised hierarchically on at least three levels which comprise terminal stations as well as subordinate and superordinate units, and in which signalling data and packet data can be switched bidirectionally via data channels, characterised in that the subordinate unit contains a data control facility (DEC) with a monitoring facility for monitoring the data channel for packet data, a logic facility for allocating a data channel, a register for temporary storage, an input (DATA IN) and an output (DATA OUT) for packet data, an output (C-DATA) for the control signal and with a programming facility for the programming of time slots for these inputs and outputs.

9. Arrangement according to Claim 8, characterised in that the outputs (DATA OUT, C-DATA) contain open-drain stages and/or form tristate outputs with additional control outputs (control).

10. Arrangement according to Claim 8 or 9, characterised in that the register is 2 bits wide and the programming facility is provided for the programming of 2 bit/s time slots.

11. Arrangement according to any one of Claims 8 to 10, characterised in that the data control facility (DEC) is also correspondingly present in the superordinate unit (PAD).

12. Arrangement according to any one of Claims 8 to 11, characterised in that the data control facility (DEC) can be inserted in a modular fashion.

**Revendications**

1. Procédé de transmission de données pour un système de commutation numérique, qui est organisé de façon hiérarchique en au moins trois plans, qui comprennent des postes terminaux, des unités subordonnées et des unités de rang supérieur, et dans lequel des données de signalisation et des données en paquets peuvent être commutées selon un mode bidirectionnel par l'intermédiaire de canaux de données, caractérisé par le fait que les unités subordonnées (LCi) réalisent une séparation de données de signalisation et de données en paquets et qu'une collision de données est empêchée grâce aux étapes opératoires suivantes :
   a) un dispositif de contrôle d'une unité subordonnée contrôle le canal de données d'une ligne (DC) de poste terminal;
   b) des données en paquets, émises par une unité de rang supérieur (PAD) et arrivant dans l'unité subordonnée (LCi), sont mémorisées temporairement et ensuite introduites dans le canal de données de la ligne (DC) de poste terminal;
   c) lors de la détermination d'un état, exempt de données en paquets, du canal de données, éventuellement des données de signalisation, sont envoyées par l'intermédiaire du canal de données au poste terminal (E) et
   d) simultanément un signal de commande indiquant l'occupation du canal de données est envoyé à l'unité de rang supérieur (PAD);
   e) si, dans l'unité de rang supérieur (PAD), le signal de commande arrive après le début de l'émission de données en paquets, l'opération d'émission est arrêtée, et
   f) les paquets de données déjà émis sont refoulés en direction de l'unité subordonnée (LCi);
   g) après une nouvelle détermination d'un état libre du canal de données, l'opération d'émission de l'unité de rang supérieur (PAD) reprend.

2. Procédé suivant la revendication 1, caractérisé par le fait que des données de signalisation ou des données en paquets, émises par un poste terminal (E), sont identifiées sur la base d'une adresse, puis séparées, et que ces données de signalisation sont envoyées à un processeur local (LCP) et les données en paquets sont envoyées à l'unité de rang supérieur (PAD).

3. Procédé suivant la revendication 1 ou 2, caractérisé par le fait que le signal de commande est envoyé dans la même voie de transmission que les données en paquets à l'unité de rang supérieur (PAD).

4. Procédé suivant les revendications 1 à 3, caractérisé par le fait que l'unité subordonnée (LCi) émet des données en paquets selon le fonctionnement multiplex en direction de l'unité de rang supérieur (PAD) et travaille selon un fonctionnement de démultiplexage dans le sens inverse d'émission.

5. Procédé suivant les revendications 1 à 4, caractérisé par le fait que les données en paquets, lors du fonctionnement d'émission, sont concentrées entre les unités subordonnées (LCi) et les unités de rang supérieur (PAD).

6. Procédé suivant les revendications 1 à 5, caractérisé par le fait que les données en paquets émises par l'unité de rang supérieur (PAD) en direction de l'unité subordonnée (LCi) sont mémorisées temporairement pendant des créneaux temporels à deux bits/s.

7. Procédé suivant les revendications 1 à 6, caractérisé par le fait que la transmission bidirectionnelle des données est exécutée entre des unités subordonnées et des unités de rang supérieur (LCi, PAD), selon une modulation par impulsions codées (PCM).

8. Dispositif pour la mise en oeuvre d'un procédé de transmission de données pour un système de commutation numérique, qui est organisé de façon hiérarchique en au moins trois plans, qui comprennent des postes terminaux, des unités subordonnées et des unités de rang supérieur, et dans lequel des données de signalisation et des données en paquets peuvent être commutées selon un mode bidirectionnel par l'intermédiaire de canaux de données, caractérisé par le fait que l'unité subordonnée contient un dispositif (DEC) de contrôle des données comportant un dispositif de surveillance servant à contrôler la présence de données en paquets dans le canal de données, un dispositif logique pour réaliser l'affectation d'un canal de données, un registre pour la mémorisation temporaire, une entrée (DATA IN) et une sortie (DATA OUT) pour des données en paquets, une sortie (C-DATA) pour le signal de commande et un dispositif de programmation pour la programmation de créneaux temporels pour ces entrées et sorties.

9. Dispositif suivant la revendication 8, caractérisé par le fait que les sorties (DATA OUT, C-DATA) contiennent des étages à drain ouvert et/ou des sorties trois-états comportant des sorties supplémentaires de commande (control).

10. Dispositif suivant la revendication 8 ou 9, caractérisé par le fait que le registre possède une largeur de 2 Dits et qu'il est prévu un dispositif de programmation pour la programmation de créneaux temporels à 2 bits/s.

11. Dispositif suivant les revendications 8 à 10, caractérisé par le fait que le dispositif (DEC) de contrôle des données est également présent, de façon correspondante, dans l'unité de rang supérieur (PAD).

12. Dispositif suivant les revendications 8 à 11, caractérisé par le fait que le dispositif (DEC) de contrôle des données peut être inséré sous forme modulaire.

## FIG 1

E11 DC
E12

LC 1

⋮

E1m DC

E21 DC
E22

LC 2

⋮

E2n

KL

PD

PAD

CPU

⋮

En1 DC
En2

LCn

⋮

Eno DC

## FIG 2

LC

E ← DG ← S/E — ICC — PBC — PCMH

IOM

LCP

## FIG 3

LC

DEC

E ← P

DC S

LCP

DL

KL

PAD

DEC

CPU

GC

10

# FIG 4

# FIG 5

# FIG 6

LC

S,P

PAD

P   C

Eii ≤ 512

CMTS

≤ 128

≤ 128

DEC 1   ....

# FIG 7

PAD

PBC 1

LC1

DEC 1   ....

PBC 2

# FIG 8

a)

DATA OUT
CONTROL
C–DATA
DATA IN

TS

OD

R

DEC

b)

DATA OUT
CONTROL
C–DATA
DATA IN

TS

TS

DEC